# EUROPÄISCHE PATENTANMELDUNG

(11) **EP 4 763 791 A1**
(43) Veröffentlichungstag der Anmeldung: **24.06.2026**
(21) Anmeldenummer: 25219683.7
(22) Anmeldetag: 01.12.2025
(51) Int. Cl.: B66F 9/075, B60K 1/04

(54) **FLURFÖRDERZEUG, INSBESONDERE SCHUBMASTSTAPLER, MIT EINEM ELEKTRISCHEN ANTRIEBSSYSTEM**

(30) Priorität: 23.12.2024 DE 102024139626
(71) Anmelder: Linde Material Handling GmbH, 63743 Aschaffenburg (DE)
(72) Erfinder: Dittler, Thomas, 63785 Obernburg am Main (DE); Rericha, Miroslav, 63743 Aschaffenburg (DE); Beno, Jan, 63743 Aschaffenburg (DE); Abraham, Matej, 63743 Aschaffenburg (DE); Dvorak, Jakub, 63743 Aschaffenburg (DE); Kharchenko, Oleksandr, 63743 Aschaffenburg (DE); Jinsik, Jiri, 63743 Aschaffenburg (DE); Wajtrova, Olga, 63743 Aschaffenburg (DE)
(74) Vertreter: Patentship Patentanwaltgesellschaft

(57) **Zusammenfassung**

Die Erfindung betrifft ein Flurförderzeug (1), insbesondere Schubmaststapler, mit einem elektrischen Antriebssystem und mit einem Batteriefach (6) zur Aufnahme einer Energieversorgungseinheit (2), insbesondere eines Batterieblocks, wobei das Flurförderzeug (1) im Bereich des Batteriefachs (6) an einer Fahrzeugaußenseite mit einer seitlichen Öffnung (8) zur Entnahme und zum Einbau der Energieversorgungseinheit (2) in horizontaler Fahrzugquerrichtung (H) des Flurförderzeugs (1) versehen ist, und mit einer Sicherungseinrichtung (10), die ausgebildet ist, die in dem Batteriefach (6) eingebaute Energieversorgungseinheit (2) zu sichern, wobei die Sicherungseinrichtung (10) einen zwischen einer Freigabestellung und einer Verriegelungsstellung um eine Schwenkachse (S) verschwenkbar am Flurförderzeug (1) angeordneten Verriegelungshebel (15) umfasst. An dem Verriegelungshebel (15) ist eine Spanneinrichtung (20) angeordnet, die zwischen einer Lösestellung und einer Spannstellung betätigbar ist und die mit einer der seitlichen Öffnung (8) zugewandten Stirnfläche (2a) der Energieversorgungseinheit (2) in Wirkverbindung bringbar ist. Die Sicherungseinrichtung (10) weist ein Keilelement (40), das an der der seitlichen Öffnung (8) gegenüberliegenden Stirnfläche (2b) der Energieversorgungseinheit (2) angeordnet ist, und ein an dem Flurförderzeug (1) angeordnetes Gegenkeilelement (41) auf, mit dem das Keilelement (40) an der Energieversorgungseinheit (2) in Wirkverbindung bringbar ist.

## Beschreibung

Die Erfindung betrifft ein Flurförderzeug, insbesondere Schubmaststapler, mit einem elektrischen Antriebssystem und mit einem Batteriefach zur Aufnahme einer Energieversorgungseinheit, insbesondere eines Batterieblocks, wobei das Flurförderzeug im Bereich des Batteriefachs an einer Fahrzeugaußenseite mit einer seitlichen Öffnung zur Entnahme und zum Einbau der Energieversorgungseinheit in horizontaler Fahrzugquerrichtung des Flurförderzeugs versehen ist, und mit einer Sicherungseinrichtung, die ausgebildet ist, die in dem Batteriefach eingebaute Energieversorgungseinheit zu sichern, wobei die Sicherungseinrichtung einen zwischen einer Freigabestellung und einer Verriegelungsstellung um eine Schwenkachse verschwenkbar am Flurförderzeug angeordneten Verriegelungshebel umfasst.

Flurförderzeuge mit einem elektrischen Antriebssystem, beispielsweise Schubmaststapler, sind insbesondere in jüngerer Zeit häufig mit einer seitlichen Öffnung für einen seitlichen Wechsel der Energieversorgungseinheit in horizontaler Richtung ausgeführt. Als Energieversorgungseinheit kann hierbei ein Batterieblock, eine Brennstoffzelleneinheit oder eine Hybridantriebseinheit vorgesehen sein. Um die Energieversorgungseinheit zu wechseln, wird die im Flurförderzeug vorhandene Energieversorgungseinheit in horizontaler und seitlicher Richtung teilweise oder vollständig aus dem Batteriefach des Flurförderzeugs aus der seitlichen Öffnung heraus bewegt.

Zur Erleichterung der Bewegung in horizontaler und seitlicher Richtung während des Wechsels der Energieversorgungseinheit können weiterhin an der Energieversorgungseinheit Rollen angeordnet werden oder im Bereich einer Aufstandsfläche in dem Batteriefach des Flurförderzeugs eine Rollenbahn oder Gleitschienen angeordnet werden. Zum Wechsel der Energieversorgungseinheit kann diese aus dem Flurförderzeug über die seitlich Öffnung teilweise oder vollständig herausgezogen werden, um dann beispielsweise mit einem Hallenkran angehoben und weiter transportiert zu werden.

Während des Betriebs des Flurförderzeugs ist die Energieversorgungseinheit in dem Batteriefach angeordnet und in dem Batteriefach gegen unbeabsichtigte Bewegung zu sichern und zu fixieren, insbesondere gegen eine unerwünschte Bewegung in Fahrzeugquerrichtung, in Fahrzeuglängsrichtung und in vertikaler Richtung nach oben. Derartige Bewegung einer als Batterieblock ausgebildeten Energieversorgungseinheit in dem Batteriefach können beispielsweise zu Beschädigungen an dem Batterieblock führen.

Ein gattungsgemäßes Flurförderzug mit den Merkmalen des Oberbegriffs des Patentanspruchs 1 ist aus der DE 10 2016 113 154 A1 bekannt.

Der vorliegenden Erfindung liegt die Aufgabe zugrunde, ein Flurförderzeug der eingangs genannten Gattung zur Verfügung zu stellen, bei dem mit geringem Bauaufwand für die Sicherungseinrichtung die Energieversorgungseinheit in dem Batteriefach gegen unbeabsichtigte Bewegung gesichert werden kann.

Diese Aufgabe wird erfindungsgemäß dadurch gelöst, dass an dem Verriegelungshebel eine Spanneinrichtung angeordnet ist, die zwischen einer Lösestellung und einer Spannstellung betätigbar ist und die mit einer der seitlichen Öffnung zugewandten Stirnfläche der Energieversorgungseinheit in Wirkverbindung bringbar ist, und die Sicherungseinrichtung ein Keilelement, das an der der seitlichen Öffnung gegenüberliegenden Stirnfläche der Energieversorgungseinheit angeordnet ist, und ein an dem Flurförderzeug angeordnetes Gegenkeilelement aufweist, mit dem das Keilelement an der Energieversorgungseinheit in Wirkverbindung bringbar ist.

Mit dem an dem Verriegelungshebel angeordneten Spanneinrichtung kann die Energieversorgungseinheit in horizontaler Richtung bewegt werden, wodurch das Keilelement, das an der der seitlichen Öffnung gegenüberliegenden Stirnfläche der Energieversorgungseinheit angeordnet ist, mit dem an dem Flurförderzeug angeordnetes Gegenkeilelement in Wirkverbindung und somit in Anlage gelangt, so dass die Energieversorgungseinheit mittels der Spanneinrichtung gegen den von dem Keilelement und dem Gegenkeilelement gebildeten Anschlag verspannt werden kann.

Hierdurch kann in einfacher Weise die in dem Batteriefach angeordnete Energieversorgungseinrichtung während des Betriebs des Flurförderzeugs gegen unerwünschte Bewegung in Fahrzeugquerrichtung gesichert werden. Die erfindungsgemäße Sicherungseinrichtung ermöglicht weiterhin in einfacher Weise einen Toleranzausgleich, um in den Abmessungen der Energieversorgungseinheit und in den Abmessungen des Batteriefachs liegende Toleranzen auszugleichen.

Gemäß einer vorteilhaften Ausgestaltungsform der Erfindung ist die Spanneinrichtung als Spannschraube ausgebildet. Die Spannschraube ist bevorzugt manuell und per Hand von einer Bedienperson zwischen der Lösestellung und der Spannstellung betätigbar, wodurch ein werkzeugloses Betätigen der Spannschraube in die Spannstellung und in die Lösestellung und somit ein werkzeugloses Betätigen der Sicherungseinrichtung ermöglicht wird. Die Spannschraube kann hierzu mit einem Sterngriff, einem Flügelgriff oder einem Knebelgriff versehen sein, wodurch eine ergonomische manuelle Betätigung der Spannschraube durch eine Bedienperson ermöglicht wird.

Gemäß einer vorteilhaften Ausgestaltungsform der Erfindung ist an der der seitlichen Öffnung zugewandten Stirnfläche der Energieversorgungseinheit eine Sicherungsplatte angeordnet, die mit einer an die Spanneinrichtung angepassten Ausnehmung versehen ist, wobei die Spanneinrichtung in der Spannstellung innerhalb der Ausnehmung angeordnet ist, wobei die Ausnehmung derart ausgebildet ist, dass in der Spannstellung der Spanneinrichtung Bewegungen der Energieversorgungseinheit in vertikaler Richtung und/oder Bewegungen der Energieversorgungseinheit in Fahrzeuglängsrichtung minimiert oder vermieden werden. Bevorzugt ist zwischen der in der Spannstellung befindlichen Spanneinrichtung und der Ausnehmung der Sicherungsplatte lediglich ein geringer Freiraum bzw. ein geringes Spiel in Fahrzeuglängsrichtung nach vorne und hinten sowie in vertikaler Richtung nach unten vorgesehen, so dass die in dem Batteriefach angeordnete Energieversorgungseinheit im Bereich der der seitlichen Öffnung zugewandten Stirnfläche in einfacher Weise während des Betriebs des Flurförderzeugs gegen unerwünschte Bewegung in Fahrzeuglängsrichtung sowie unerwünschte Bewegung in vertikaler Richtung nach oben gesichert werden kann.

Gemäß einer vorteilhaften Ausgestaltungsform der Erfindung weist das Keilelement eine Keilfläche auf, die in der Spannstellung der Spanneinrichtung mit einer Gegenkeilfläche des Gegenkeilelements in Anlage bringbar ist, wobei die Keilfläche und die Gegenkeilfläche derart ausgebildet sind, dass in einer Spannstellung der Spanneinrichtung Bewegungen der Energieversorgungseinheit in vertikaler Richtung und Bewegungen der Energieversorgungseinheit in Fahrzeugquerrichtung minimiert oder vermieden werden. Die Energieversorgungseinheit wird mittels der Spanneinrichtung gegen den von dem Keilelement und dem Gegenkeilelement gebildeten Anschlag verspannt werden, wodurch die in dem Batteriefach angeordnete Energieversorgungseinrichtung während des Betriebs des Flurförderzeugs in einfacher Weise gegen unerwünschte Bewegung in Fahrzeugquerrichtung gesichert werden. Beim Verspannen der Energieversorgungseinheit mit der Keilfläche gegen die Gegenkeilfläche wird zudem in einfacher Weise erzielt, dass in einer Spannstellung der Spanneinrichtung die in dem Batteriefach angeordnete Energieversorgungseinrichtung während des Betriebs des Flurförderzeugs an der der seitlichen Öffnung gegenüberliegenden Stirnfläche der Energieversorgungseinheit gegen unerwünschte Bewegung in Fahrzeuglängsrichtung sowie unerwünschte Bewegung in vertikaler Richtung nach oben gesichert werden kann.

Gemäß einer vorteilhaften Ausgestaltungsform der Erfindung ist das Gegenkeilelement mit einer in Fahrzeuglängsrichtung angeordneten Ausnehmung versehen, in die das Keilelement einführbar ist, wobei das Keilelement und die Ausnehmung des Gegenkeilelements derart ausgebildet sind, dass in der Spannstellung der Spanneinrichtung Bewegungen der Energieversorgungseinheit in Fahrzeuglängsrichtung minimiert oder vermieden werden. Hierdurch wird in einfacher Weise erzielt, dass die in dem Batteriefach angeordnete Energieversorgungseinrichtung während des Betriebs des Flurförderzeugs an der der seitlichen Öffnung gegenüberliegenden Stirnfläche der Energieversorgungseinheit gegen unerwünschte Bewegung in Fahrzeuglängsrichtung gesichert werden kann.

Gemäß einer vorteilhaften Ausgestaltungsform der Erfindung ist der Verriegelungshebel mit einem weiteren Keilelement versehen und ist an dem Flurförderzeug ein weiteres Gegenkeilelement vorgesehen, mit dem das Keilelement an dem Verriegelungshebel in Wirkverbindung bringbar ist. Beim Verspannen der Energieversorgungseinheit mit der Spanneinrichtung kann hierdurch erzielt werden, dass sich der in der Verriegelungsstellung befindliche Verriegelungshebel mit dem weiteren Keilelement mit dem weiteren Gegenkeilelement verspannt, wodurch ein günstiger Kraftfluss der von der Spanneinrichtung aufgebrachten Klemmkräfte erzielt werden kann und der Verriegelungshebel in einfacher Weise in der Verriegelungsstellung gesichert werden kann.

Gemäß einer vorteilhaften Ausgestaltungsform der Erfindung weist das weitere Keilelement eine weitere Keilfläche auf, die in der Spannstellung der Spanneinrichtung mit einer weiteren Gegenkeilfläche des weiteren Gegenkeilelements in Anlage bringbar ist. Hierdurch kann in einfacher Weise erzielt werden, dass der Verriegelungshebel bei in der Spannstellung befindlicher Spanneinrichtung in der Verriegelungsstellung verspannt und blockiert ist, so dass in Verbindung mit der Sicherungsplatte die in dem Batteriefach angeordnete Energieversorgungseinheit im Bereich der der seitlichen Öffnung zugewandten Stirnfläche in einfacher Weise während des Betriebs des Flurförderzeugs gegen unerwünschte Bewegung in Fahrzeuglängsrichtung sowie unerwünschte Bewegung in vertikaler Richtung nach oben gesichert werden kann.

Gemäß einer vorteilhaften Ausgestaltungsform der Erfindung ist an dem Flurförderzeug eine Sensoreinrichtung angeordnet, die ausgebildet ist, den in der Verriegelungsstellung befindlichen Verriegelungshebel zu sensieren. Hierdurch kann in einfacher Weise der in der Verriegelungsstellung befindliche Verriegelungshebel erfassten werden und während des Betriebs des Flurförderzeugs die in dem Batteriefach verspannte Energieversorgungseinheit erfasst werden.

Gemäß einer vorteilhaften Ausgestaltungsform der Erfindung ist an dem Flurförderzeug eine Rolleneinrichtung angeordnet, auf der die Energieversorgungseinheit in Fahrzeugquerrichtung bewegbar ist. Hierdurch kann in einfacher Weise die Energieversorgungseinheit in dem Batteriefach in Einschubrichtung werden und durch Betätigen der Spanneinrichtung das an der Energieversorgungseinheit angeordnete Keilelement gegen das an dem Flurförderzeug angeordnetes Gegenkeilelement verspannt werden.

Gemäß einer vorteilhaften Ausgestaltungsform der Erfindung ist der Verriegelungshebel an einem Lagerzapfen zwischen der Freigabestellung und der Verriegelungsstellung um die Schwenkachse verschwenkbar angeordnet ist, wobei der Verriegelungshebel an dem Lagerzapfen in Axialrichtung verschiebbar angeordnet ist. Hierdurch kann beim Betätigen der Spanneinrichtung in einfacher Weise erzielt werden, dass der Verriegelungshebel sich in Axialrichtung auf dem Lagerzapfen verschieben kann und das weitere Keilelement mit dem weiteren Gegenkeilelement in Eingriff gebracht und an dem weiteren Gegenkeilelement verspannt werden kann.

Die Erfindung weist eine Reihe von Vorteilen auf.

Die erfindungsgemäße Sicherungseinrichtung ermöglicht es, die in dem Batteriefach angeordnete Energieversorgungseinheit derart zu verspannen, dass die Energieversorgungseinheit im Betrieb des Flurförderzeugs gegen unerwünschte Bewegungen in Fahrzeugquerrichtung, gegen unerwünschte Bewegung in Fahrzeuglängsrichtung sowie gegen unerwünschte Bewegung in vertikaler Richtung gesichert werden.

Darüber hinaus ermöglicht die erfindungsgemäße Sicherungseinrichtung in einfacher Weise einen Toleranzausgleich von unterschiedlichen Abmessungen der Energieversorgungseinheit sowie des Batteriefachs im Flurförderzeug.

Die erfindungsgemäße Sicherungseinrichtung ermöglicht weiterhin mittels der manuell betätigten Spanneinrichtung ein werkzeugloses Lösen und Befestigung bzw. Verspannen der Sicherungseinrichtung und somit ein werkzeuglos durchzuführende Sicherung bzw. Fixierung der in dem Batteriefach angeordneten Energieversorgungseinheit gegen unerwünschte Bewegungen.

Mit der erfindungsgemäße Sicherungseinrichtung, mit der die in dem Batteriefach angeordnete Energieversorgungseinheit während des Betriebs des Flurförderzeugs gegen ungewünschte Bewegungen in Fahrzeugquerrichtung, in Fahrzeuglängsrichtung sowie in vertikaler Richtung gesichert werden kann, wird weiterhin ein Kippen der im Batteriefach eingebauten Energieversorgungseinheit verhindert und Beschädigungen der Energieversorgungseinheit im Betrieb des Flurförderzeugs minimiert, da mit der erfindungsgemäße Sicherungseinrichtung keine Relativbewegungen der Energieversorgungseinheit im Batteriefach in Fahrzeugquerrichtung, in Fahrzeuglängsrichtung und in vertikaler Richtung während des Betriebs des Flurförderzeugs mehr möglich sind.

Weitere Vorteile und Einzelheiten der Erfindung werden beispielhaft anhand des in den schematischen Figuren dargestellten Ausführungsbeispiels näher erläutert.
- Figur 1: ein erfindungsgemäßes Flurförderzeug in einer perspektivischen Darstellung von der rechten Fahrzeugseite mit einem in einer Freigabestellung befindlichen Verriegelungshebel einer Sicherungseinrichtung,
- Figur 2: eine Darstellung gemäß der Figur 1 mit dem in einer Verriegelungsstellung befindlichen Verriegelungshebel der Sicherungseinrichtung,
- Figur 3: eine Darstellung gemäß der Figur 2 in einer weiteren perspektivischen Darstellung,
- Figur 4: das erfindungsgemäßes Flurförderzeug in einer perspektivischen Darstellung von der linken Fahrzeugseite mit einem mit einem Gegenkeilelement in Eingriff stehenden Keilelement der Sicherungseinrichtung,
- Figur 5: eine Darstellung gemäß der Figur 4 mit einer transparenten Darstellung des Gegenkeilelements und
- Figur 6: den Verriegelungshebel der Sicherungseinrichtung in einer perspektivischen Darstellung.

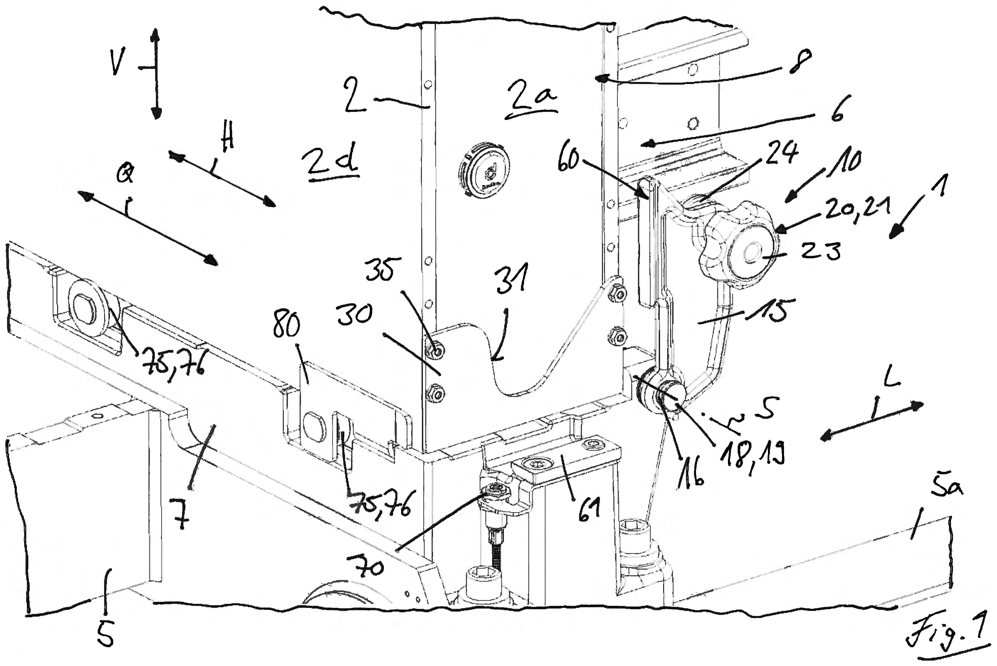

In den Figuren 1 bis 5 ist ein erfindungsgemäßes, beispielsweise als Schubmaststapler, ausgebildetes, elektrisch betriebenes Flurförderzeug 1 in einer perspektivischen Ansicht dargestellt, das mit einem seitlichen und horizontalen Wechsel einer Energieversorgungseinheit 2, beispielsweise eines Batterieblocks, in Fahrzeugquerrichtung Q versehen ist.

Von dem Flurförderzeug 1 ist ein Fahrzeugkörper 5 dargestellt mit einem linken Radarm 5a und einem rechten Radarm 5b. Auf die beiden Radarme 5a, 5b, die sich in Fahrzeuglängsrichtung L erstrecken, ist im Bodenbereich eines Batteriefachs 6 ein Batterieträger 7 aufgesetzt, der sich in Fahrzeugquerrichtung Q erstreckt und an der Oberseite eine Aufstandsfläche für die Energieversorgungseinheit 2 bildet.

Das Flurförderzeug 1 ist auf einen seitlichen Wechsel der als Batterieblock ausgebildeten Energieversorgungseinheit 2 in seitlicher und horizontaler Richtung H, d.h. in Fahrzeugquerrichtung Q, eingerichtet. Der Fahrzeugkörper 5 ist hierzu an der im dargestellten Ausführungsbeispiel rechten Fahrzeugseite im Bereich des Batteriefachs 6 mit einer seitlichen Öffnung 8 versehen, durch die die Energieversorgungseinheit 2 in horizontaler Fahrzeugquerrichtung Q - wie in der Figur 1 durch den die Wechselrichtung verdeutlichenden Pfeil H verdeutlicht ist - zum Wechsel der Energieversorgungseinheit 2 aus dem Batteriefach 6 herausbewegt bzw. in das Batteriefach 6 hineinbewegt werden kann.

Das Flurförderzeug 1 ist mit einer Sicherungseinrichtung 10 versehen, mit der die in dem Batteriefach 6 eingebaute Energieversorgungseinheit 2 gegen unerwünschte Bewegungen während des Betriebs des Flurförderzeugs 1 gesichert werden kann.

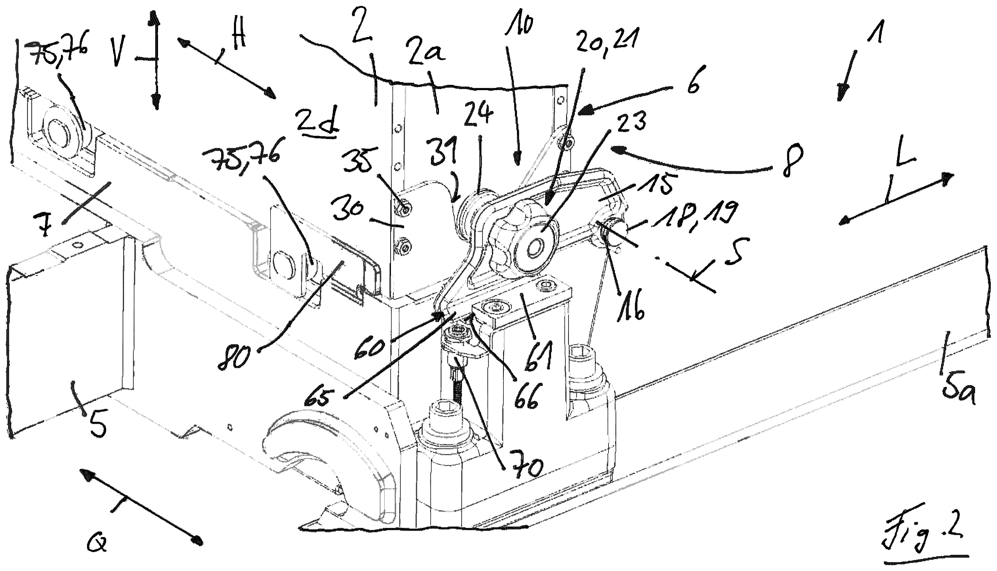

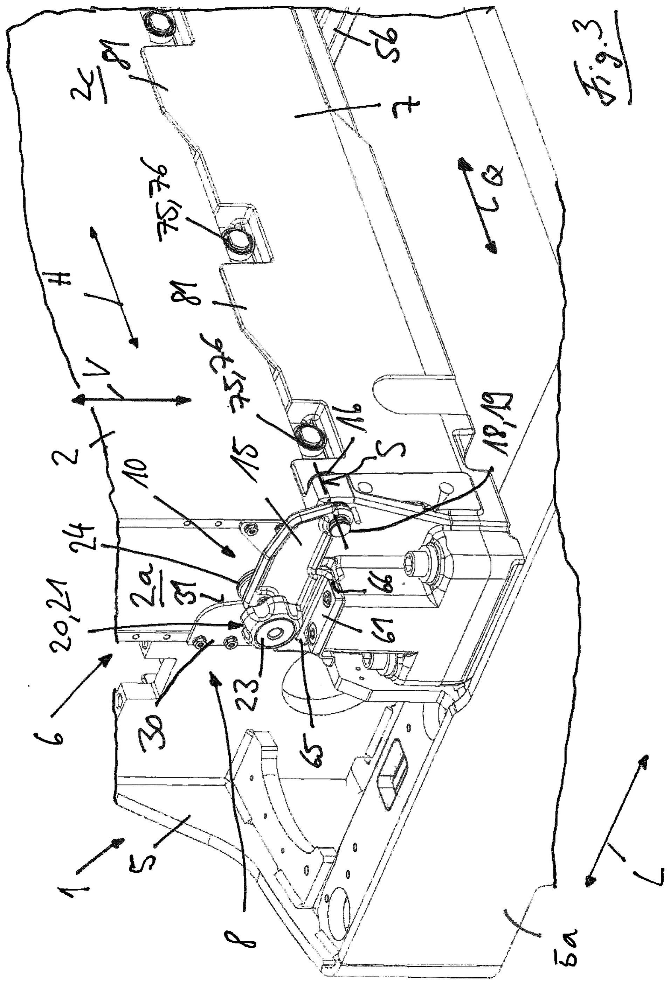

Die Sicherungseinrichtung 10 umfasst einen zwischen einer Freigabestellung und einer Verriegelungsstellung um eine Schwenkachse S verschwenkbar am Flurförderzeug 1 angeordneten Verriegelungshebel 15. In der Figur 1 ist der Verriegelungshebel 15 in der nach oben verschwenkten Freigabestellung dargestellt. In der Figuren 2 und 3 ist der Verriegelungshebel 15 in der nach unten verschwenkten Verriegelungsstellung dargestellt.

Zur verschwenkbaren Lagerung des Verriegelungshebels 15 am Flurförderzeug 1 ist im dargestellten Ausführungsbeispiel an dem Batterieträger 7 ein sich in Fahrzeugquerrichtung Q erstreckender Lagerzapfen 16 befestigt, auf dem der Verriegelungshebel 15 mit einer Aufnahmebohrung 17 drehbar gelagert ist. Der Verriegelungshebel 15 ist an dem Lagerzapfen 16 in Axialrichtung des Lagerzapfens 16, d.h. in Fahrzeugquerrichtung Q, verschiebbar angeordnet. Zur axialen Sicherung des Verriegelungshebels 15 auf dem Lagerzapfen 16 ist der Lagerzapfen 16 mit einer Axialsicherung 18 versehen, die im dargestellten Ausführungsbeispiel von einem Bund 19 am Ende des Lagerzapfens 16 gebildet ist.

An dem Verriegelungshebel 15 ist eine Spanneinrichtung 20 angeordnet, die zwischen einer Lösestellung und einer Spannstellung betätigbar ist. In der Verriegelungsstellung des Verriegelungshebels 15 kann die Spanneinrichtung 20 mit einer der seitlichen Öffnung 8 zugewandten Stirnfläche 2a der Energieversorgungseinheit 2 in Wirkverbindung gebracht werden.

Im dargestellten Ausführungsbeispiel ist die Spanneinrichtung 20 als Spannschraube 21 ausgebildet, die in eine Gewindebohrung 22 des Verriegelungshebel 15 eingeschraubt ist. Die Spannschraube 21 ist manuell und somit per Hand von einer Bedienperson zwischen der Lösestellung und der Spannstellung betätigbar. Herzu ist im dargestellten Ausführungsbeispiel die Spannschraube 21 mit einem Sterngriff 23 versehen. Die Spannschraube 21 ist zur Anlage mit der Stirnfläche 2a der Energieversorgungseinheit 2 im dargestellten Ausführungsbeispiel mit einem Anlageteller 24 versehen.

Die Energieversorgungseinheit 2 ist an der der seitlichen Öffnung 8 zugewandten Stirnfläche 2a mit einer Sicherungsplatte 30 versehen. Im dargestellten Ausführungsbeispiel ist die Sicherungsplatte 30 im vertikal unteren Bereich der Energieversorgungseinheit 2 angeordnet, beispielsweise mittels Schraubverbindungen 35.

Die Sicherungsplatte 30 ist mit einer an den Anlageteller 24 der Spanneinrichtung 20 angepassten Ausnehmung 31 versehen. Bei in der Verriegelungsstellung befindlichem Verriegelungshebel 15 und in der Spannstellung befindlicher Spanneinrichtung 20 ist die Spanneinrichtung 20 mit dem Anlageteller 24 - wie in den Figuren 2 und 3 dargestellt ist - innerhalb der Ausnehmung 31 angeordnet. Zwischen der Ausnehmung 31 und dem Anlageteller 24 ist bei in der Spannstellung befindlicher Spanneinrichtung 20 in Fahrzeuglängsrichtung L nach vorne und hinten kein Spiel bzw. lediglich ein geringer Luftspalt vorhanden, so dass in der Spannstellung der Spanneinrichtung 20 Bewegungen der Energieversorgungseinheit 2 in Fahrzeuglängsrichtung L minimiert oder vermieden werden. Zwischen der Ausnehmung 31 und dem Anlageteller 24 ist bei in der Spannstellung befindlicher Spanneinrichtung 20 weiterhin in vertikaler Richtung V kein Spiel bzw. lediglich ein geringer Luftspalt in vertikaler Richtung V nach unten vorgesehen, so dass in der Spannstellung der Spanneinrichtung 20 Bewegungen der Energieversorgungseinheit 2 in vertikaler Richtung V, insbesondere Bewegungen der Energieversorgungseinheit 2 in vertikaler Richtung V nach oben, minimiert oder vermieden werden.

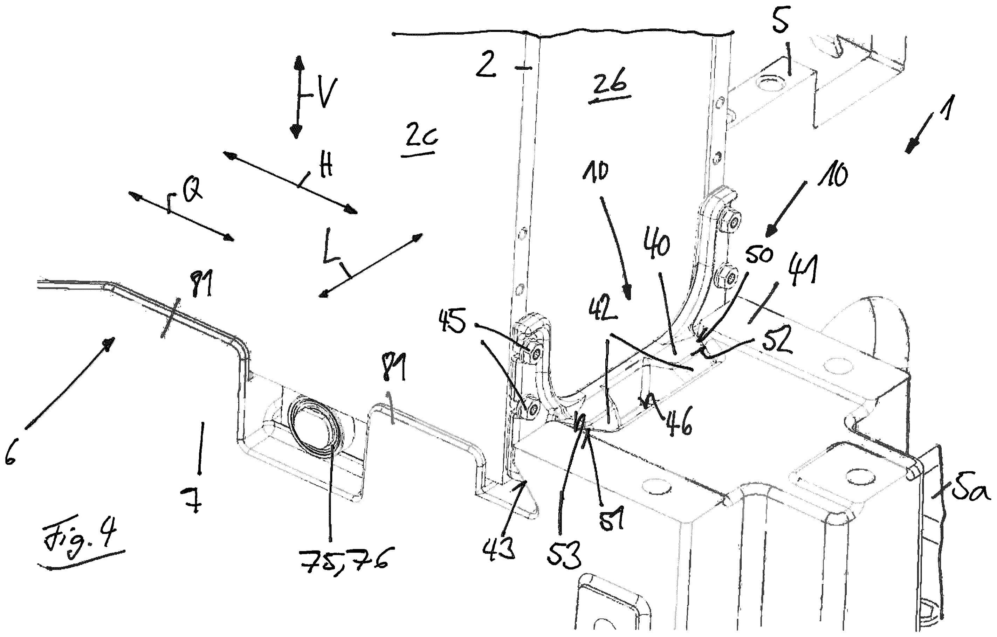

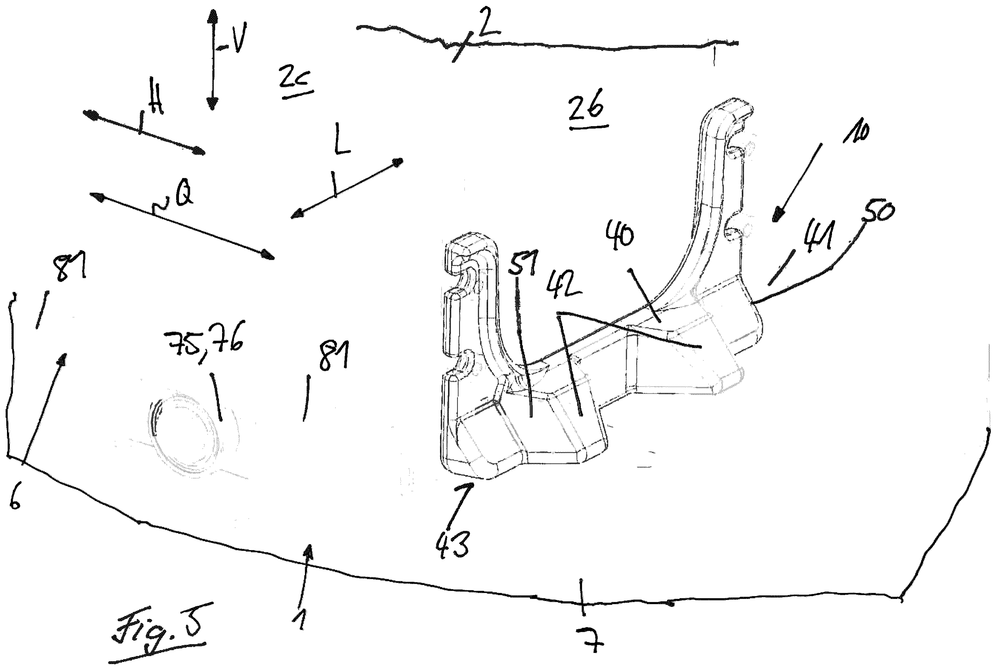

Die Sicherungseinrichtung 10 umfasst weiterhin - wie in den Figuren 4 und 5 dargestellt ist - ein Keilelement 40, das an der der seitlichen Öffnung 8 und somit der Stirnfläche 2a gegenüberliegenden Stirnfläche 2b der Energieversorgungseinheit 2 angeordnet ist, und ein an dem Flurförderzeug 1 angeordnetes Gegenkeilelement 41, mit dem das Keilelement 40 an der Energieversorgungseinheit 2 in Wirkverbindung bringbar ist.

Im dargestellten Ausführungsbeispiel ist das Keilelement 40 im vertikal unteren Bereich der Energieversorgungseinheit 2 angeordnet, beispielsweise mittels Schraubverbindungen 45. Die Gegenkeilelement 41 ist im dargestellten Ausführungsbeispiel an dem Batterieträger 7 ausgebildet.

Das Keilelement 40 weist eine Keilfläche 42 auf, im dargestellten Ausführungsbeispiel eine in Richtung zur linken Fahrzeugseite nach unten weisende Keilfläche 42, die in der Spannstellung der Spanneinrichtung 20 mit einer Gegenkeilfläche 43, im dargestellten Ausführungsbeispiel eine in Richtung zur rechten Fahrzeugseite nach oben weisende Keilfläche 43, des Gegenkeilelements 41 in Anlage bringbar ist. Die Keilfläche 42 und die Gegenkeilfläche 43 sind derart ausgebildet, dass in der Spannstellung der Spanneinrichtung 20 Bewegungen der Energieversorgungseinheit 2 in Fahrzeugquerrichtung Q in Richtung zur linken Fahrzeugseite sowie in vertikaler Richtung V minimiert oder vermieden werden. Die Keilfläche 42 und die Gegenkeilfläche 43 sind bevorzugt derart ausgeführt, dass diese eine schiefe Ebene mit Selbsthemmung bilden.

Das Gegenkeilelement 41 ist im dargestellten Ausführungsbeispiel mit einer in Fahrzeuglängsrichtung L verlaufenden Ausnehmung 46 versehen, in die das Keilelement 40 einführbar. Das Keilelement 40 ist mit Seitenflächen 50, 51 versehen, die in der der Spannstellung der Spanneinrichtung 20 mit Anlageflächen 52, 53 an der Ausnehmung 56 des Gegenkeilelements 51 in Kontakt bringbar sind, wodurch in der Spannstellung der Spanneinrichtung 20 Bewegungen der Energieversorgungseinheit 2 in Fahrzeuglängsrichtung L minimiert oder vermieden werden. Die Seitenfläche 50, 51 und die Anlagefläche 52, 53 können in Fahrzeugquerrichtung Q verlaufend angeordnet sein oder - wie im dargestellten Ausführungsbeispiel V-förmig aufeinander zulaufend angeordnet sein. Die Seitenflächen 50, 51 und die Anlageflächen 52, 53 sind bevorzugt derart ausgeführt, dass diese eine schiefe Ebene mit Selbsthemmung bilden.

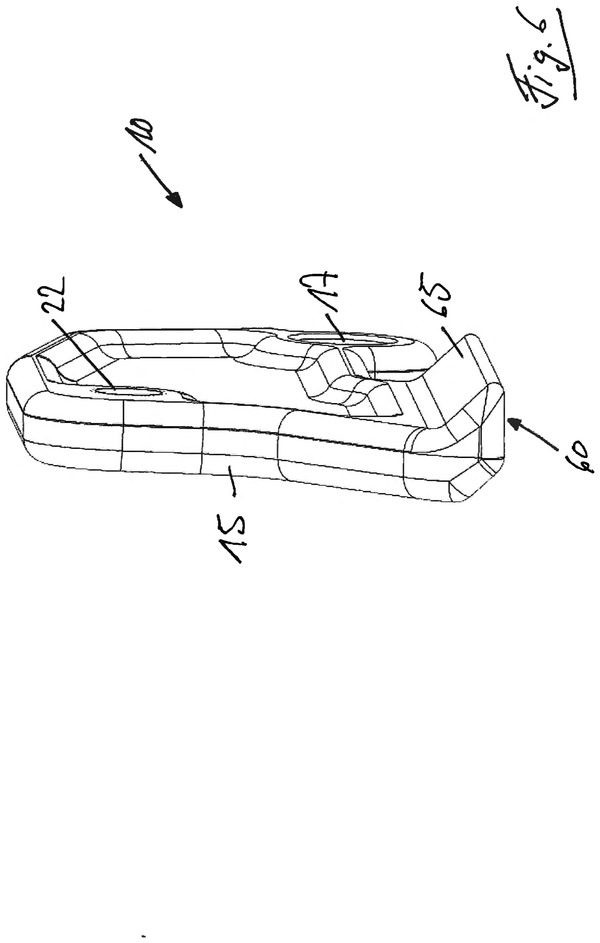

Der Verriegelungshebel 15 ist - wie in den Figuren 1 bis 3 und 6 dargestellt ist - mit einem weiteren Keilelement 60 versehen. An dem Flurförderzeug 1 ist ein weiteres Gegenkeilelement 61 vorgesehen, mit dem das Keilelement 60 an dem Verriegelungshebel 15 in Wirkverbindung bringbar ist. Das Gegenkeilelement 61 ist im dargestellten Ausführungsbeispiel an dem Batterieträger 7 befestigt.

Das weitere Keilelement 60 weist eine weitere Keilfläche 65 auf, im dargestellten Ausführungsbeispiel eine in Richtung zur rechten Fahrzeugseite nach unten weisende Keilfläche 65, die in der Spannstellung der Spanneinrichtung 20 mit einer weiteren Gegenkeilfläche 66, im dargestellten Ausführungsbeispiel eine in Richtung zur linken Fahrzeugseite nach oben weisende Keilfläche 66, des weiteren Gegenkeilelements 61 in Anlage bringbar ist. Die weitere Keilfläche 65 und die weitere Gegenkeilfläche 66 sind bevorzugt derart ausgeführt, dass diese eine schiefe Ebene mit Selbsthemmung bilden.

Das Keilelement 40 und das Gegenkeilelement 41 im Bereich der Stirnfläche 2b der Energieversorgungseinheit 2 und das weitere Keilelement 60 und das weitere Gegenkeilelement 61 im Bereich der Stirnfläche 2a der Energieversorgungseinheit 2 sind hierbei in der Art einer Schwalbenschwanzführung aufgebaut.

An dem Batterieträger 7 ist eine Sensoreinrichtung 70 angeordnet ist, die ausgebildet ist, den in der Verriegelungsstellung befindlichen Verriegelungshebel 15 zu sensieren.

Im dargestellten Ausführungsbeispiel kann die Energieversorgungseinheit 2 auf einer Rolleneinrichtung 75 in Fahrzeugquerrichtung Q in das Batteriefach 6 hineingeschoben bzw. herausgeschoben werden. Im dargestellten Ausführungsbeispiel weist die Rolleneinrichtung 75 mehrere an dem Batterieträger 7 drehbar angeordnete Rollen 76 auf, die mit dem Boden der Energieversorgungseinheit 2 zusammenwirken.

Der Batterieträger 7 ist im dargestellten mit Führungselementen 80, 81 versehen, die mit einer Vorderfläche 2c und einer Hinterfläche 2d der Energieversorgungseinheit 2 zusammenwirken und mit denen die Energieversorgungseinheit 2 mit Hineinschieben bzw. Herausschieben aus dem Batteriefach 6 in Fahrzeuglängsrichtung L geführt werden kann.

Zum Einbau der Energieversorgungseinheit 2 in das Batteriefach 6 wird die Energieversorgungseinheit 2 bei in der Freigabestellung befindlichem Verriegelungshebel 15 auf den Batterieträger 7 aufgesetzt und mit der Stirnfläche 2b voraus in das Batteriefach 6 hineingeschoben, bis das an der der Stirnfläche 2b der Energieversorgungseinheit 2 angeordnete Keilelement 40 mit dem Gegenkeilelement 41 am Batterieträger 7 in Anlage gelangt.

Anschließend wird der Verriegelungshebel 15 um die Schwenkachse S nach unten in die Verriegelungsstellung verschwenkt und anschließend die Spanneinrichtung 20 in die Spannstellung betätigt. Hierdurch gelangt die Spannschraube 21 mit dem Anlageteller 24 in Kontakt mit der Stirnfläche 2a der Energieversorgungseinheit 2, wodurch beim weiteren Betätigen der Spannschraube 21 in die Spannstellung die Energieversorgungseinheit 2 weiter in Einschubrichtung in das Batteriefach 6 hineingeschoben wird, wodurch das Keilelement 41 mit der Keilfläche 42 gegen die Gegenkeilfläche 43 des Gegenkeilelements 41 und mit den Seitenflächen 50, 51 gegen die Anlageflächen 52, 53 an der Ausnehmung 56 des Gegenkeilelements 51 verspannt wird. Beim weiteren Betätigen der Spannschraube 21 in die Spannstellung wird weiterhin der Verriegelungshebel 16 mit der weiteren Keilfläche 65 des Keilelements 60 gegen die Gegenkeilfläche 66 des weiteren Gegenkeilelements 61 verspannt.

Hierdurch wird mit die im Batteriefach 6 angeordnete Energieversorgungseinheit 2 im Betrieb des Flurförderzeugs 1 derart an den beiden Stirnflächen 2a, 2b auf dem Batterieträger 7 verspannt, dass unerwünschte Bewegungen der Energieversorgungseinheit 2 in Fahrzeuglängsrichtung L, unerwünschte Bewegungen der Energieversorgungseinheit 2 in Fahrzeugquerrichtung Q sowie unerwünschte Bewegungen der Energieversorgungseinheit 2 in vertikaler Richtung V vermieden werden und die Energieversorgungseinheit 2 gegen Kippen um eine in Fahrzeugquerrichtung Q verlaufende Achse gesichert wird, wodurch die Gefahr von Beschädigungen der auf dem Batterieträger 7 befindlichen Energieversorgungseinheit 2 im Betrieb des Flurförderzeugs 1 minimiert werden kann.

## Patentansprüche

1. Flurförderzeug (1), insbesondere Schubmaststapler, mit einem elektrischen Antriebssystem und mit einem Batteriefach (6) zur Aufnahme einer Energieversorgungseinheit (2), insbesondere eines Batterieblocks, wobei das Flurförderzeug (1) im Bereich des Batteriefachs (6) an einer Fahrzeugaußenseite mit einer seitlichen Öffnung (8) zur Entnahme und zum Einbau der Energieversorgungseinheit (2) in horizontaler Fahrzugquerrichtung (H) des Flurförderzeugs (1) versehen ist, und mit einer Sicherungseinrichtung (10), die ausgebildet ist, die in dem Batteriefach (6) eingebaute Energieversorgungseinheit (2) zu sichern, wobei die Sicherungseinrichtung (10) einen zwischen einer Freigabestellung und einer Verriegelungsstellung um eine Schwenkachse (S) verschwenkbar am Flurförderzeug (1) angeordneten Verriegelungshebel (15) umfasst, **dadurch gekennzeichnet, dass** an dem Verriegelungshebel (15) eine Spanneinrichtung (20) angeordnet ist, die zwischen einer Lösestellung und einer Spannstellung betätigbar ist und die mit einer der seitlichen Öffnung (8) zugewandten Stirnfläche (2a) der Energieversorgungseinheit (2) in Wirkverbindung bringbar ist, und die Sicherungseinrichtung (10) ein Keilelement (40), das an der der seitlichen Öffnung (8) gegenüberliegenden Stirnfläche (2b) der Energieversorgungseinheit (2) angeordnet ist, und ein an dem Flurförderzeug (1) angeordnetes Gegenkeilelement (41) aufweist, mit dem das Keilelement (40) an der Energieversorgungseinheit (2) in Wirkverbindung bringbar ist.

2. Flurförderzeug nach Anspruch 1, **dadurch gekennzeichnet, dass** die Spanneinrichtung (20) als Spannschraube (21) ausgebildet ist.

3. Flurförderzeug nach Anspruch 1 oder 2, **dadurch gekennzeichnet, dass** an der der seitlichen Öffnung (8) zugewandten Stirnfläche (2a) der Energieversorgungseinheit (2) eine Sicherungsplatte (30) angeordnet ist, die mit einer an die Spanneinrichtung (20) angepassten Ausnehmung (31) versehen ist, wobei die Spanneinrichtung (20) in der Spannstellung innerhalb der Ausnehmung (31) angeordnet ist, wobei die Ausnehmung (31) derart ausgebildet ist, dass in der Spannstellung der Spanneinrichtung (20) Bewegungen der Energieversorgungseinheit (2) in vertikaler Richtung (V) und/oder Bewegungen der Energieversorgungseinheit (2) in Fahrzeuglängsrichtung (L) minimiert oder vermieden werden.

4. Flurförderzeug nach einem der Ansprüche 1 bis 3, **dadurch gekennzeichnet, dass** das Keilelement (40) eine Keilfläche (42) aufweist, die in der Spannstellung der Spanneinrichtung (20) mit einer Gegenkeilfläche (43) des Gegenkeilelements (41) in Anlage bringbar ist, wobei die Keilfläche (42) und die Gegenkeilfläche (43) derart ausgebildet sind, dass in einer Spannstellung der Spanneinrichtung (20) Bewegungen der Energieversorgungseinheit (2) in vertikaler Richtung (V) und Bewegungen der Energieversorgungseinheit (2) in Fahrzeugquerrichtung (Q) minimiert oder vermieden werden.

5. Flurförderzeug nach einem der Ansprüche 1 bis 4, **dadurch gekennzeichnet, dass** das Gegenkeilelement (41) mit einer in Fahrzeuglängsrichtung (L) angeordneten Ausnehmung (46) versehen ist, in die das Keilelement (40) einführbar ist, wobei das Keilelement (40) und die Ausnehmung (46) des Gegenkeilelements (41) derart ausgebildet sind, dass in der Spannstellung der Spanneinrichtung (20) Bewegungen der Energieversorgungseinheit (2) in Fahrzeuglängsrichtung (L) minimiert oder vermieden werden.

6. Flurförderzeug nach einem der Ansprüche 1 bis 5, **dadurch gekennzeichnet, dass** der Verriegelungshebel (15) mit einem weiteren Keilelement (60) versehen ist und an dem Flurförderzeug (1) ein weiteres Gegenkeilelement (61) vorgesehen ist, mit dem das Keilelement (60) an dem Verriegelungshebel (15) in Wirkverbindung bringbar ist.

7. Flurförderzeug nach Anspruch 6, **dadurch gekennzeichnet, dass** das weitere Keilelement (60) eine weitere Keilfläche (65) aufweist, die in der Spannstellung der Spanneinrichtung (20) mit einer weiteren Gegenkeilfläche (66) des weiteren Gegenkeilelements (61) in Anlage bringbar ist.

8. Flurförderzeug nach einem der Ansprüche 1 bis 7, **dadurch gekennzeichnet, dass** an dem Flurförderzeug (1) eine Sensoreinrichtung (70) angeordnet ist, die ausgebildet ist, den in der Verriegelungsstellung befindlichen Verriegelungshebel (15) zu sensieren.

9. Flurförderzeug nach einem der Ansprüche 1 bis 8, **dadurch gekennzeichnet, dass** an dem Flurförderzeug (1) eine Rolleneinrichtung (75) angeordnet ist, auf der die Energieversorgungseinheit (2) in Fahrzeugquerrichtung (Q) bewegbar ist.

10. Flurförderzeug nach einem der Ansprüche 1 bis 9, **dadurch gekennzeichnet, dass** der Verriegelungshebel (15) an einem Lagerzapfen (16) zwischen der Freigabestellung und der Verriegelungsstellung um die Schwenkachse (S) verschwenkbar angeordnet ist, wobei der Verriegelungshebel (15) an dem Lagerzapfen (16) in Axialrichtung verschiebbar angeordnet ist.
